# EUROPEAN PATENT APPLICATION

(11) **EP 2 234 297 A1**
(43) Date of publication of application: **29.09.2010**
(21) Application number: 10001309.3
(22) Date of filing: 09.02.2010
(51) Int. Cl.: H04H 60/27, G11B 27/02, G11B 27/10

(54) **Method for operating a portable mobile internet media recorder**

(30) Priority: 26.03.2009 EP 09004329
(71) Applicant: novero GmbH, 40468 Düsseldorf (DE)
(72) Inventor: Schmitz, Uwe, 40299 Düsseldorf (DE)
(74) Representative: Gesthuysen, von Rohr & Eggert

(57) **Abstract**

This invention relates to a method for operating a portable mobile Internet media recorder. Such media recorder (5) comprises an energy supply unit (10), a control unit (12), a user interface (14) comprising a display (15) and at least one user key (16), a wireless Internet communication link (17), a media player (18) with a digital media data memory (19), and a media data output (20). Such mobile Internet media recorder (5) is usually used in a mobile Internet-based data communication system comprising at least a monitoring station (2) for a number of media sources (4). The essential aspects of the method are as follows:
Media data of a media track (21) streamed by an Internet media source (4) are checked for at least one specific media characteristic. This can be done either by the software of the media recorder (5) or, preferably, by the monitoring station (2). Upon finding the specific media characteristic the media data of the particular media track (21) are automatically stored in the media data memory (19) of the media recorder (5) along with a track identification (22). Media tracks (21) can be played through the media data output (20) while they are streamed from the media source (4) and/or can be retrieved from the media data memory (19) later either automatically or upon user's demand to be played through the media data output (20).

## Description

The invention relates to a method for operating a portable mobile Internet media recorder according to claim 1 or claim 2 or claim 3, and to a corresponding media recorder according to claim 13 as well as a monitoring station in a mobile Internet-based data communication system according to claim 15.

The prior art forming the starting point of the invention (WO-A-2007/031486) describes a method for operating a portable Internet radio which is performing as a portable mobile Internet media recorder also. This media recorder is arranged to play media data streamed from a particular Internet media source like a streaming radio station and/or to download media data files directly to a digital media data memory for later use.

In the prior art system the method is implemented in a mobile phone or in an MP3-player performing as a portable radio communication terminal.

The mobile Internet media recorder as described in the prior art has an energy supply unit, a control unit, a user interface with a display and at least one user key, a wireless Internet communication link, a media player with a digital media data memory and a media data output either as a loudspeaker or as an interface with a head-set, in particular a Bluetooth wireless interface.

In the prior art mobile Internet media recorder it is possible to create a personal playlist of media tracks, in particular music tracks, stored in the media data memory. If those media tracks are music tracks they may be arranged in a predefined set from a certain artist or of a particular genre.

Along with the option to play media tracks from the media data memory the prior art media recorder provides the option to use streamed data from a streaming media source over the Internet.

Streaming video or audio is a one-way transmission over the Internet. If it is delivering only audio content it is named an Internet radio. However, also video content can be streamed. Unlike files used for storing in the media data memory as an MP3-player which are played after they have been downloaded, streamed content is played to the user within a few seconds of requesting and the streamed data are not stored permanently (WO 2007/031486 A1, page 2).

In the prior art document it is already explained that management of media data in a mobile Internet media recorder is mainly performed by a user interface comprising a display and at least one user key which may be realized as a touch-sensitive part of the display also. Such media recorder should be compact and lightweight in order to be truly portable. The prior art discloses a number of tools to manage media data on such a portable, small size media recorder.

The object of the present invention is to provide a method for operating a portable mobile Internet media recorder in a way to even better suit the user's demand.

In the method for operating a portable mobile Internet media recorder according to claim 1 the software of the media recorder performs the following operating method steps:
- Media data of a media track streamed by an Internet media source and received via the communication link are automatically checked for at least one specific media characteristic.
- Upon finding the specific media characteristic the media data of the particular media track are automatically stored in the media data memory along with a track identification.
- Media tracks can be played through the media data output while they are received via the communication link and/or can be retrieved from the media data memory later either automatically or upon user's demand.

Of course, the mobile Internet media recorder according to the invention can have all the features of the prior art mobile Internet media recorder, too.

The main aspect of the present invention is that in this method the software of the media recorder is intelligent in that the media data of a particular media track received via the communication link are automatically checked for at least one specific media characteristic which is then used for further handling of the particular media track. It either can be ignored if the specific media characteristic is not found or it can be stored in the media data memory along with a track identification when the software recognized the specific media characteristic.

There are a number of definitions relevant for the present invention.

A "track" is a media file. It can be a text file, a song, a video, a podcast in any data format, et al.

A "track identification" is an attribute that is linked to a track and is used to identify the track (identity code) as well as the start and the end of the track, which is important in particular if the track is streamed as a part in a media stream (see page 2 above). Usually track identification is done by storing of a tag associated with the recorded track in a media tag play list (WO 2007/031486 A1, page 4).

A "specific media characteristic" is an attribute of a specific media file. It covers media type (music, speech, video), media metadata (artist, album, genre), sometimes also bandwidth or file type. Often these attributes are also transmitted in a media tag (WO 2007/031486 A1, page 2).

An "energy supply" unit is any kind of energy source, in particular a non-rechargeable battery or a rechargeable battery.

A "control unit" means any kind of electronic processing device like a microcomputer, a microprocessor or a combination of a number of microprocessors and data storage units like RAM.

A "user interface" includes a display as a user output interface and at least one user key as a user input interface. In this description the output interface, the display, is separate from the input interface, the user key. However, up to date touch screen displays will perform the function of a user input interface along with the function of a user output interface. So it should be noted that those terms are understood in a broad sense as a means for a user to actively input a character or a command into the electronic processing device of the media recorder. The user input interface may also comprise software and an associated hardware system for handling voice commands.

The "wireless Internet communication link" is any kind of wireless interface, in particular for connection to the Internet like WLAN, UMTS or the like. These communication links are particularly suitable for receiving streaming media, in particular streaming audio or video content. The communication link may also be used for downloading media tracks to the digital media data memory of the media recorder.

The "media player" is any kind of digital audio or video player. It is capable of handling media data of different sources such as streaming media data or data retrieved from the digital media data memory associated to the media player. The media player can have the form of a MP3-player but this is only one example thereof.

The "digital media data memory" associated to the media player is the storage location for all kinds of media data either downloaded or streamed over the wireless Internet communication link.

The "media data output" is any kind of equipment able to perform its function like a loudspeaker or a wired or wireless interface to an audio headset, e.g. connected by a Bluetooth-connection, or any kind of video output which even includes the use of the display of the user interface.

The "monitoring station" is any kind of electronic server for an Internet-based data communication system which performs the task of monitoring a number of media sources. It may optionally also filter a smaller number of media sources from the large number of monitored media sources. It further may provide other back end services. The monitoring station may further include other aspects, in particular may perform as a station directory collecting all available Internet streaming media sources.

The term "comprising" means that the listed items are essential but there can be other items in the set in addition to the essential items.

According to the present invention the streaming media data are not immediately played, although this can be done, but are automatically stored in the media data memory along with a track identification. The invention may also provide a combination of a media recorder for streamed media data and for downloaded media data files. Due to the track identification the streamed media data which form a media data file stored in the media data memory can be retrieved following a specific search characteristic.

Above explained method according to claim 1 is implemented by way of the software of the media recorder itself.

However, the data volume or other aspects may require a different approach which is covered by the method according to claim 2 and in an alternative version by the method according to claim 3.

Those two methods include the mobile Internet-based data communication system which comprises at least a number of media sources, a monitoring station and a wireless network. Expert terminology identifies those parts of the system as back end while the portable mobile Internet media recorder is named the front end. Of course, a central server performing the tasks of monitoring, filtering etc. has sufficient capacity to handle the huge amount of data usually available to the user.

In the version of claim 2 the following operating method steps are performed:
- Media data of a media track streamed by an Internet media source are automatically checked by the monitoring station for at least one specific media characteristic.
- Upon finding the specific media characteristic the media data of the particular media track are streamed to the media recorder via the communication link.
- The media data of the particular media track are automatically stored in the media data memory along with a track identification.
- Media tracks can be played through the media data output while they are received via the communication link and/or can be retrieved from the media data memory later either automatically or upon user's demand to be played through the media data output.

Similar to the version of claim 1 the streaming of media data by the media sources as such is not affected. The monitoring station is checking the media data received from the huge number of monitoring stations for the relevant specific media characteristic or characteristics. In the method of claim 2 the monitoring station is enabling the data transfer to the media recorder upon recognition of the relevant media characteristic in a media track.

In the alternative method of claim 3 the method steps are slightly different, namely:
- Media data of a media track streamed by an Internet media source are automatically checked by the monitoring station for at least one specific media characteristic.
- Upon finding the specific media characteristic in the media data of a particular media track alert data including meta data of the relevant media source are transmitted from the monitoring station to the media recorder.
- Upon receipt of the alert data the media recorder starts to receive the media data of the particular media track streaming from the identified media source via the communication link and to automatically store the media data of the particular media track in the media data memory of the media recorder along with a track identification.
- Media tracks can be played through the media data output of the media recorder while they are received via the communication link and/or can be retrieved from the media data memory later either automatically or upon user's demand to be played through the media data output.

Here the monitoring station just "informs" the media recorder that streaming of a particular media track is imminent from a specific media source. The media recorder is given meta data, in particular the URL (Internet address) and perhaps additional information like starting time and/or a starting command. Of course, a similar closing information will have to be transmitted by the monitoring station or has to be identified in the media data of the particular media track by the media recorder itself.

As in the prior art mentioned above the monitoring station, the back end, may be the source to create a user's wish list, priorities etc. including mood reading etc. The monitoring station may also be a touch point for the introduction of advertising etc. The monitoring station may further provide all kinds of meta data, and also graphics, lyrics, background information related to artists etc..

In a preferred embodiment of the invention the track identification is compiled from track genre and/or track title and/or artist's name and/or media data source. For each media track a separate media data file in the media data memory is provided which can be retrieved by means of its track identification.

In a further embodiment the method further comprises the steps of selecting a particular media source and streaming media data from the selected media source for a particular media track and/or for a particular period of time. In this embodiment of the invention, selection of a particular media source like a particular streaming radio station that actually provides the most relevant content, is part of the method.

In a further preferred embodiment it is provided that the method further comprises the steps of defining a particular search profile for track identification, following the content streamed from a number of different media sources and selecting a particular media source upon finding a track identification falling within the defined search profile and streaming the media data of the actual media track from the selected media source for storing in the media data memory. So the media recorder or monitoring station operating according to this method continuously follows the contents streamed from different media sources and selects automatically which media tracks are to be processed and finally stored in the media data memory of the media recorder. So only "interesting" media tracks are stored for later retrieval.

The definition of "interesting" is based on the search profile for track identification that has been established by the user before either more or less manually or by selecting a particular search profile from a predefined list of possible search profiles.

The implementation of above mentioned preferred method may also be done by provisionally storing streamed content and afterwards deleting content that does not correspond to the search profile.

In the method described above it is further possible to continuously follow the content streamed from said number of different media sources so that a further selection of a particular media track from a specific media source can be done even while a media track from another media source is streamed to the media data memory.

In a further and preferred embodiment of the invention it is additionally possible to provide that the method further comprises defining a particular search profile for track identification also for retrieval of media tracks from the media data memory, and, preferably, establishing a playlist of selected media tracks and playing the selected media tracks following the prior established playlist.

As explained above a prominent field for the method according to the invention is the Internet radio, namely handling audio data from a streaming radio station or a number of streaming radio stations. In this embodiment the mobile Internet media recorder would be an audio recorder. However, the same is possible, with additional processor capacity, for video data, Podcast Internet television etc..

The wireless Internet communication link of the mobile Internet media recorder may be provided with software for one way communication only. For an advanced level of performance, in particular for an exchange of meta data according to claims 2 or 3, it is preferable that the communication via the communication link uses a software for enabling both way communication between monitoring station and media recorder. Such kind of software is widely used under the designation API (Application Programming Interface). Such interface controls the data streaming back and forth between the monitoring station and the media recorder.

In a particularly preferable embodiment the method further comprises the steps of defining the search profile by means of the media recorder, transmitting the particular search profile to the monitoring station and performing the search by means of the monitoring station. So the characteristics of a particular demand are shaped by the user and the selection of the appropriate media tracks from the huge number of media tracks simultaneously streamed from different media sources is done by the monitoring station.

The present invention also covers a portable mobile Internet media recorder according to claim 13 which is **characterized in that** the media recorder is operated based on software that performs all or some of the method steps according to any one of the claims 1 to 12.

Preferably, the components of the media recorder are contained in a compact, portable housing.

Further preferably the media recorder is provided as a mobile phone or as an MP3-player or in the form of a wristwatch or of a belt-attachable unit or of a headset.

In particular and most preferably the media recorder according to the invention is a wearable device that connects via its communication link to the Internet and plays Internet radio stations into a stereo headset. On its display radio stations are shown and a choice of artists, titles and genres is offered. With only a few buttons as keys the user may define favoured stations or may use back end functions to specify those radio channels appropriate to the user's actual mood.

Of course, the mobile Internet media recorder should be equipped to control the audio volume on the headset.

Most importantly, individual tracks from the currently streamed Internet radio channel or a parallel "silent" radio channel can be recorded permanently in the media data memory for further retrieval. Track identification for each media track provides for easy accessibility.

The mobile Internet media recorder according to the invention can also be integrated into a mobile phone or a traditional MP3-player, but also into laptop computers, electronic organizers, personal digital assistants etc.. In its most preferred form it is a most compact, portable stand-alone device wearable on a wrist of your hand or attached to your belt.

Further, the mobile Internet media recorder according to the invention can be combined with a docking station either for local use at home or in the user's car. The present invention also covers a monitoring station in a mobile Internet-based data communication system according to claim 15.

Now, a preferred embodiment of the invention will be described with reference to the accompanying drawings. In the drawings
- Fig. 1: is a schematic illustration of the background of the present inven- tion,
- Fig. 2: is a schematic display of the method steps performed according to the invention and
- Fig. 3: shows schematically the internal structure of a mobile Internet me- dia recorder according to the invention.

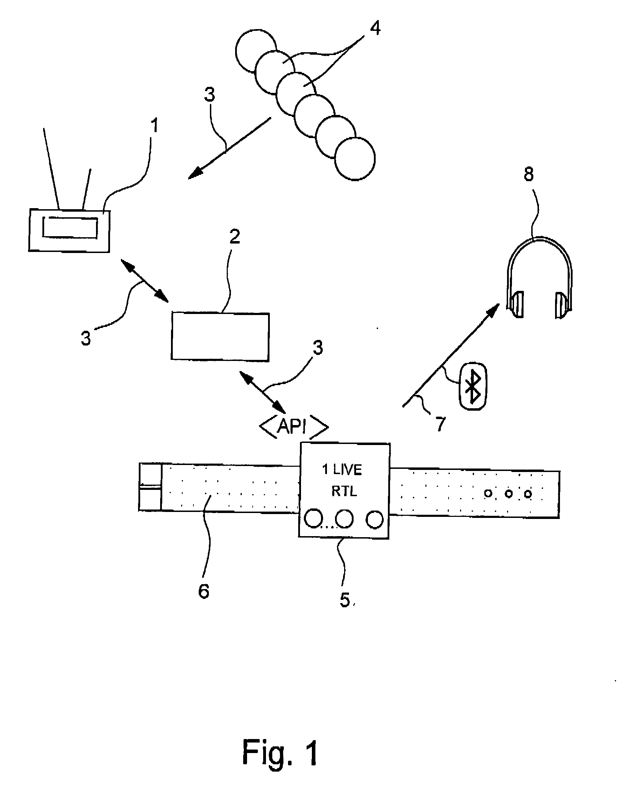

Fig. 1 illustrates the general technical architecture of a mobile Internet-based data communication system where the method according to the invention for operating a portable mobile Internet media recorder can be used.

In the system a station directory 1 collects all available internet streaming radio stations and provides station names, addresses (URL), genre etc.. So it performs the function of a content aggregator.

A monitoring station 2 will be used to monitor the content streamed from media sources and to filter out unwanted media stations. This server may be used also for back end handling following user preferences, user profiles etc. (see a number of examples in WO-A-2007/031486). Station directory 1 and monitoring station 2 are not necessarily separate items but can be combined in a single system or server, too.

A wireless network 3 to access the Internet is indicated by arrows and may be realized e.g. as UMTS (Universal Mobile Telephony System), WLAN (Wireless Local Area Network), HSDPA (High Speed Downlink Packet Access). A number of media sources 4 are in this example indicated as different streaming radio stations.

In the middle of the system we find a portable mobile Internet media recorder 5, here in the form of a compact, portable item like a wristwatch on a wristband 6. This media recorder 5 communicates via a wireless interface, here in the form of a Bluetooth link 7, with a stereo headset 8 to be worn by a user.

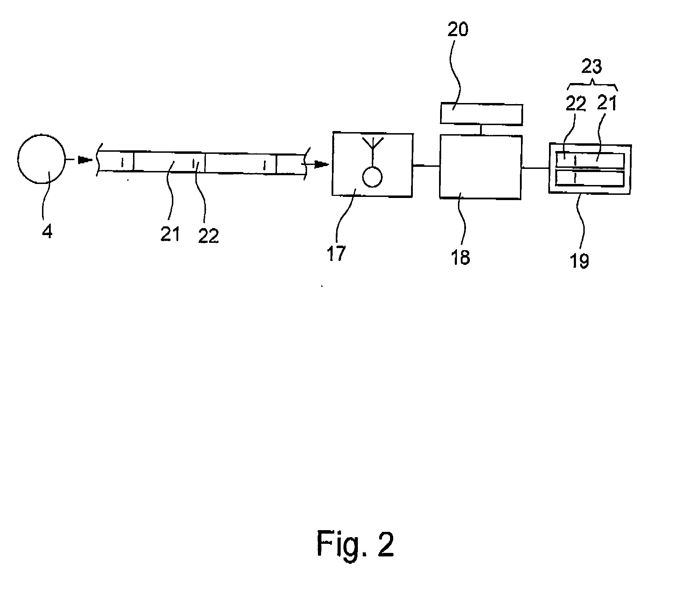

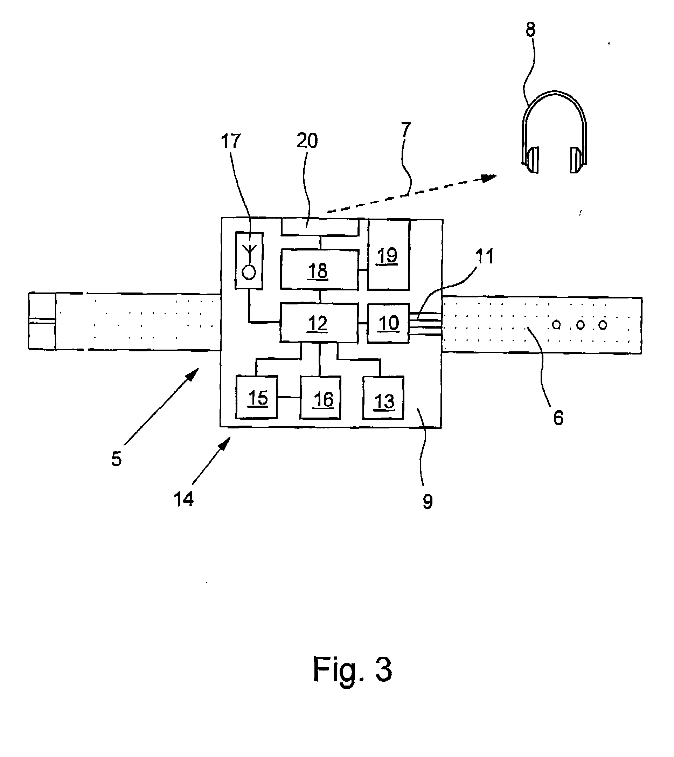

In Fig. 2 the basic idea of the inventive method is indicated while Fig. 3 illustrates schematically the internal structure of a media recorder 5 according to the invention as shown in Fig. 1.

The mobile Internet media recorder 5 has a compact housing 9 which makes this media recorder a mobile portable system. It is mounted on a wristband 6 as already indicated in Fig. 1. In general, the media recorder 5 according to the invention is somehow portable.

In the housing 9 we find an energy supply unit 10. Here it is a rechargeable battery charged by means of a charging dock 11. The energy supply unit 10 provides electrical energy to all elements of the recorder 5. The charging dock 11 may also be used for other connections, e.g. by wire to any external unit including a memory stick of the like. Moreover, the charging dock 11 may also perform as a connection to a local audio system or to a car audio system (home dock; car dock). Those connections may be realized individually, too.

The control unit 12 represents the central intelligence of the media recorder 5. The control unit 12 is connected to an insertion slot 13 for a data SIM-card or other identification and authorization means. The data SIM-card can realize a flat rate connection to the Internet via the network 3.

The control unit 12 provides the hardware for software of the media recorder 5 that operates the complete media recorder 5 as to be explained hereafter.

Fig. 1 and 3 together show a user interface 14 comprising a display 15 and at least one user key 16. Fig. 1 schematically indicates the display 15 above a line of three user keys 16 indicated as press buttons. However, as explained above, the user key 16 may be realized by a touch screen display, too.

Further, a wireless Internet communication link 17 is indicated with the antenna-sign. It connects to the network 3, e.g. of the UMTS-standard.

An essential part of the system is a media player 18 controlled by control unit 12 and associated with a digital media data memory 19.

In the present invention the media player 18 is connected to a media data output 20 which here incorporates a media data amplifier. The media data output 20 here is connected via the Bluetooth link 7 to the headset 8. However, the media data output 20 itself can be a loudspeaker or any other kind of media data connection.

Now, the following operating method steps are performed by software of the media recorder 5 by means of the control unit 12. The control unit 12 may be a microcomputer, a microprocessor or a group of microprocessors and the usual memories (RAM, ROM, EPROM etc.). The method steps are:
- Media data of a media track 21 streamed by an Internet media source 4 and received via the communication link 17 are automatically checked for at least one specific media characteristic.
- Upon finding the specific media characteristic the media data of the particular media track 21 are automatically stored in the media data memory 19 along with a track identification 22.
- Media tracks can be played through the media data output 20 while they are received via the communication link 17 and/or can be retrieved from the media data memory 19 later either automatically or upon user's demand to be played through the media data output 20.

Fig. 2 exemplifies the media source 4 as a radio source for audio media tracks 21 continuously streamed from this media source 4. They reach the communication link 17 of the media recorder 5 and, following the analysis by the operating software, are selectively stored in the media data memory 19 and can be retrieved following their individual track identification 22. They are stored as media data files 23 combined of track identification 22 and associated media track 21.

However, as in the prior art mentioned above, the media data file 23 may also be meta data identifying an already stored media data file or just an identification of a media item which is stored in a directory to a different memory location.

The Internet-based data communication system schematically displayed in Fig. 1 can be operated in a different way so that the operating method steps are not solely performed by the software of the media recorder 5 but by a combination of the software in the monitoring station 2 on the one hand and that in the media recorder 5 on the other hand.

One version of this method has the following method steps:
- Media data of a media track 21 streamed by an Internet media source 4 are automatically checked by the monitoring station 2 for at least one specific media characteristic.
- Upon finding the specific media characteristic the media data of the particular media track 21 are streamed to the media recorder 5 via the communication link 17.
- The media data of the particular media track 21 are automatically stored in the media data memory 19 of the media recorder 5 along with a track identification 22.
- Media tracks 21 can be played through the media data output 20 of the media recorder 5 while they are received via the communication link 17 and/or can be retrieved from the media data memory 19 later either automatically or upon user's demand to be played through the media data output 20 of the media recorder 5.

Here the monitoring station 2 performs the task of media track selection and act ively initiates the transmittal to the media recorder 5.

In a different version of the method the following operating method steps are performed:
- Media data of a media track 21 streamed by an Internet media source 4 are automatically checked by the monitoring station 2 for at least one specific media characteristic.
- Upon finding the specific media characteristic in the media data of a particular media track 21 alert data including meta data of the relevant media source 4 are transmitted from the monitoring station 2 to the media recorder 5.
- Upon receipt of the alert data the media recorder 5 starts to receive the media data of the particular media track 21 streaming from the identified media source 4 via the communication link 17 and to automatically store the media data of the particular media track 21 in the media data memory 19 of the media recorder 5 along with a track identification 22.
- Media tracks 21 can be played through the media data output 20 of the media recorder 5 while they are received via the communication link 17 and/or can be retrieved from the media data memory 19 later either automatically or upon user's demand to be played through the media data output 20 of the media recorder 5.

This is the presently preferred method for operating the portable mobile Internet media recorder 5, Upon receipt of the alert data from the monitoring station 2 the media recorder 5 tunes into the URL of the relevant media source 4 and receives via the communication link 17 the media data streamed from that media source 4 and stores the media data of the particular media track 21 in the media data memory 19.

In a preferred embodiment of the invention the track identification 22 of a media track 21 is compiled from track genre and/or track title and/or artist's name and/or media source 4 meta data. In an audio system handling media tracks 21 from a streaming radio station as a media source 4 track identification 22 will be compiled from track genre and title as a preferred embodiment.

It is generally possible that the method further comprises the steps of selecting a particular media source 4 and streaming media data from the selected media source 4 for a particular media track 21 and/or for a particular period of time. Here in particular the station directory 1 of Fig. 1 along with the station filter 2 for the number of media sources 4 will play an important role.

A preferred embodiment of the invention operates the portable mobile Internet media recorder 5, in particular for audio content, as follows:

A particular search profile for track identification 22 of media tracks 21 is defined, This definition can be made by the user in detail. It can also be prepared in a list of possible search profiles where the user selects a particular search profile from this list. The user may select a particular time, like the late 80's and e.g. Rock Music from England. If the track identification provides for such kind of information it is possible to specifically select only the most interesting items by means of this very specific search profile.

The inventive method follows the content streamed from a number of different media sources 4 and selects a particular media source 4 upon finding a track identification 22 falling within the defined search profile. From this moment onwards the media data of the actual media track 21 from the selected media source 4 are streamed actively to the media recorder 5 and are stored there under the specific track identification 22 in a media data file 23 in the media data memory 19. Continuously the media sources 4 are supervised in order to make a further selection of a particular media track 21 falling within the defined search profile.

Above mentioned preferred embodiments are relevant for all versions of the inventive method. The different method steps are differently distributed between monitoring station 2 and media recorder 5.

(t has been said above that in principle communication via the communication link 17 may be a one way communication from the monitoring station 2 to the media recorder 5, However, in a preferred embodiment of the invention communication via the communication link 17 is using a software for enabling both way communication between monitoring station 2 and media recorder 5. This is indicated in Fig. 1 by the term "API" in brackets meaning Application Programming Interface. Such interface controls the data stream back and forth between monitoring station 4 and media recorder 5.

In a further preferred embodiment of the invention the method further comprises the steps of defining the search profile by means of the media recorder 5, transmitting the particular search profile to the monitoring station 2 and performing the search by means of the monitoring station 2.

According to the present invention retrieval of media data files 23 from the media data memory 19 is organized similarly. It is provided that the method further comprises defining a particular search profile for track identification 22 also for retrieval of media tracks 21 from the media data memory 19, preferably, establishing a playlist of selected media tracks 21 and playing the selected media tracks 21 following the prior established playlist. So the user may define a particular search profile according to his actual mood and may then retrieve interesting media tracks 21 falling within this profile. The user can thus have the best possible selection of media data files 23.

In the preferred and explained embodiment it is provided that the media data stored are audio data from a streaming radio station as a media source 4. However, a similar system may be used for video data, Internet TV, Podcast etc.

## Claims

1. Method for operating a portable mobile Internet media recorder,
the media recorder (5) comprising:
an energy supply unit (10),
a control unit (12),
a user interface (14) comprising a display (15) and at least one user key (16),
a wireless Internet communication link (17),
a media player (18) with a digital media data memory (19), and
a media data output (20),
wherein the following operating method steps are performed by software of the media recorder (5);
- Media data of a media track (21) streamed by an Internet media source (4) and received via the communication link (17) are automatically checked for at least one specific media characteristic.
- Upon finding the specific media characteristic the media data of the particular media track (21) are automatically stored in the media data memory (19) along with a track identification (22).
- Media tracks (21) can be played through the media data output (20) while they are received via the communication link (17) and/or can be retrieved from the media data memory (19) later either automatically or upon user's demand to be played through the media data output (20).

2. Method for operating a portable Internet media recorder in a mobile Internet-based data communication system,
the system comprising:
a number of media sources (4),
a monitoring station (2) and
a wireless network (3),
the media recorder comprising:
an energy supply unit (10),
a control unit (12),
a user interface (14) comprising a display (15) and at least one user key (16),
a wireless Internet communication link (17),
a media player (18) with a digital media data memory (19), and
a media data output (20),
wherein the following operating method steps are performed;
- Media data of a media track (21) streamed by an Internet media source (4) are automatically checked by the monitoring station (2) for at least one specific media characteristic.
- Upon finding the specific media characteristic the media data of the particular media track (21) are streamed to the media recorder (5) via the communication link (17).
- The media data of the particular media track (21) are automatically stored in the media data memory (19) of the media recorder (5) along with a track identification (22).
- Media tracks (21) can be played through the media data output (20) of the media recorder (5) while they are received via the communication link (17) and/or can be retrieved from the media data memory (19) later either automatically or upon user's demand to be played through the media data output (20) of the media recorder (5).

3. Method for operating a portable Internet media recorder in a mobile Internet-based data communication system,
the system comprising:
a number of media sources (4),
a monitoring station (2) and
a wireless network (3),
the media recorder comprising:
an energy supply unit (10),
a control unit (12),
a user interface (14) comprising a display (15) and at least one user key (16),
a wireless Internet communication link (17),
a media player (18) with a digital media data memory (19), and
a media data output (20),
wherein the following operating method steps are performed:
- Media data of a media track (21) streamed by an Internet media source (4) are automatically checked by the monitoring station (2) for at least one specific media characteristic.
- Upon finding the specific media characteristic in the media data of a particular media track (21) alert data including meta data of the relevant media source (4) are transmitted from the monitoring station (2) to the media recorder (5).
- Upon receipt of the alert data the media recorder (5) starts to receive the media data of the particular media track (21) streaming from the identified media source (4) via the communication link (17) and to automatically store the media data of the particular media track (21) in the media data memory (19) of the media recorder (5) along with a track identification (22).
- Media tracks (21) can be played through the media data output (20) of the media recorder (5) while they are received via the communication link (17) and/or can be retrieved from the media data memory (19) later either automatically or upon user's demand to be played through the media data output (20) of the media recorder (5).

4. The method according to any one of the preceding claims, **characterized in that**
the track identification (22) is compiled from track genre and/or track title and/or artist's name and/or media source meta data.

5. The method according to any one of the preceding claims, **characterized in that**
the method further comprises the steps of selecting a particular media source (4) and streaming media data from the selected media source (4) for a particular media track (21) and/or for a particular period of time.

6. The method according to any one of the preceding claims, **characterized in that**
the method further comprises the steps of
defining a particular search profile for track identification (22),
following the content streamed from a number of different media sources (4) and selecting a particular media source (4) upon finding a track identification (22) falling within the defined search profile and
streaming the media data of the actual media track (21) from the selected media source (4) for storing in the media data memory (19).

7. The method according to claim 6, **characterized in that** the method further comprises the step of continuously following the content streamed from said number of different media sources (4) for a further selection of a particular media track (21) falling within the defined search profile from any of said media sources (4).

8. The method according to any one of the preceding claims, **characterized in that**
the method further comprises defining a particular search profile for track identification (22) also for retrieval of media tracks (21) from the media data memory (19), and,
preferably, establishing a play-list of selected media tracks (21) and playing the selected media tracks (21) following the prior established play-list.

9. The method according to any one of the preceding claims, **characterized in that**
the media data stored are audio data from streaming radio stations as media sources (4).

10. The method according to any one of the preceding claims, **characterized in that**
the media data stored are audio and video data from corresponding media sources (4).

11. The method according to any one of the preceding claims, **characterized in that**
the communication via the communication link (17) uses a software for enabling both way communication between monitoring station (2) and media recorder (5).

12. The method according to the claims 6 and 11, **characterized in that** the method further comprises the steps of
defining the search profile by means of the media recorder (5), transmitting the particular search profile to the monitoring station (2) and performing the search by means of the monitoring station (2).

13. Mobile Internet media recorder, comprising:
an energy supply unit (10),
a control unit (12),
a user interface (14) comprising a display (15) and at least one user key (16),
a wireless Internet communication link (17),
a media player (18) with a digital media data memory (19), and
a media data output (20),
and a software for operating the recorder,
**characterized in that**
the media recorder (5) is operated based on software that performs all or some of the method steps according to any one of the claims 1 to 12.

14. Media recorder according to claim 13, **characterized in that** the components of the media recorder (5) are contained in a compact, portable housing (9),
wherein, preferably,
the media recorder is provided as a lightweight unit, in particular as a mobile phone or as an MP3-player or in the form of a wrist-watch or of a belt-attachable unit or of a head-set.

15. Monitoring station in a mobile Internet-based data communication system, **characterized in that**
the monitoring station (2) is operated based on software that performs all or some of the method steps according to claim 2 or claim 3 and optionally according to any one of the claims 4 to 12.
